Europäisches Patentamt

(19) European Patent Office

Office européen des brevets

(11) Publication number: **0 074 739**
**B1**

(12) **EUROPEAN PATENT SPECIFICATION**

(45) Date of publication of patent specification: **09.04.86**

(21) Application number: **82304522.4**

(22) Date of filing: **26.08.82**

(51) Int. Cl.⁴: **B 29 C 33/10**

(54) **Forming apparatus.**

(30) Priority: **28.08.81 GB 8126340**

(43) Date of publication of application:
**23.03.83 Bulletin 83/12**

(45) Publication of the grant of the patent:
**09.04.86 Bulletin 86/15**

(84) Designated Contracting States:
**BE DE FR GB IT NL SE**

(56) References cited:
**DE-A-2 211 928**
**DE-A-2 813 293**
**DE-A-2 842 074**
**DE-B-2 639 067**
**DE-U-7 001 963**

(73) Proprietor: **METAL BOX p.l.c.**
**Queens House Forbury Road**
**IReading Berkshire RG1 3JH (GB)**

(72) Inventor: **Young, Robert Ian Marr**
**3 Yewdale Drive**
**Ellesmere Port Cheshire (GB)**
Inventor: **Kidd, Donald Frederick**
**41 Westbrook Road**
**Liverpool L25 2PU (GB)**
Inventor: **De'Ath, Roderick Michael**
**18 Haywards Close**
**Wantage Oxfordshire (GB)**

(74) Representative: **Wright, Peter David John et al**
**R.G.C. Jenkins & Co. 12-15, Fetter Lane**
**London EC4A 1PL (GB)**

## Description

This invention relates to apparatus for forming articles from sheet material by deforming the material into contact with a mould surface.

In apparatus for the above purpose, it is well known to employ the technique known as thermoforming. Thermoforming apparatus, particularly of the platten type, is widely used for the production of containers, such as tubs for containing margarine, cottage cheese, salad and other products, from styrene and A.B.S.

It would be desirable to thermoform similar containers from polypropylene on similar equipment, but in practice it has not proved possible to do this satisfactorily, particularly at the speeds required in commercial mass productions.

When the normally successful thermoforming technique has been applied to polypropylene sheet material, the formed polypropylene has been prone to distort once it is removed from the mould surface, and the material has also included thin spots. Thus, the resultant formed articles have had irregularities of shape, and thin spots in their walls, which render them commercially unacceptable. The exact reasons for these problems are not fully understood but are believed to be related to the fact that polypropylene is highly temperature sensitive so that relatively small temperature differences between one point and another during and after forming may cause quite significant differences in the behaviour of the material between those points.

DE—B2—2639067 and DE—A—2211928 disclose vent means, located at the bottom of a mould, for permitting air to escape from within the mould as sheet material is deformed into the mould. This would not be expected to solve the problems just referred to.

Somewhat surprisingly, it has been found that these problems are substantially alleviated by means of the present invention.

The present invention provides apparatus for forming an article from plastics sheet material, said apparatus comprising means defining a mould surface having a base wall and a side wall tapering towards said base wall, means for deforming said sheet material into contact with said mould surface, and vent means for permitting air to escape from within the mould as the sheet material is deformed into the mould, characterised in that said side wall contains vent channels which are distributed over the area of said side wall and which lead into said vent means.

It is believed that such apparatus may well be advantageous when forming other materials than polypropylene, for example, polyolefins and polyesters, and in forming materials which are not heated before being formed.

In the particular case of thermoforming tubs from polypropylene, it has been found that the use of apparatus in accordance with the invention substantially reduces both distortion following forming and the formation of localised thin areas in the side walls of the tubs during forming.

It is thought that this is at least partially due to the vent channels encouraging uniform evacuation of the air behind the polypropylene as it is being urged towards the mould surface. As a result, a substantially uniform pressure distribution is achieved within the diminishing space between the polypropylene and the mould surface. This promotes both uniform stretching of the polypropylene material and consistent contact of this material with the surface of the mould, which in turn gives rise to a uniform temperature distribution within the polypropylene material. The invention may be employed with other plastics materials, whenever improved uniformity of evacuation may provide an improved result.

Although the sheet material being formed may be permitted to bulge a certain amount into the vent channels, these channels preferably have dimensions such that the material will not wholly fill, and therefore block, them when it is deformed into contact with the mould surface.

For customer appeal and print quality it is desirable for the external surface of the side wall of a tub container for food products, to have a smooth finish. It is believed that this can be achieved, yet the invention remains effective, when the vent channels are cut so that they are too narrow for the material to enter them to any visible extent during deformation of the material against the mould surface.

In a practical embodiment, the vent channels have been made between about 0.10 and about 0.15 mm (about 0.004 and about 0.006 inches) deep, and the same width, and their presence has been hardly detectable in the finished article. Preferably, the vent channel width is between 0.025 and 1.0 mm (0.001 and 0.04 inches), with the channel depth being at least 0.025 mm (0.001 inches).

The vent channels may be produced by various means, for example they may be cut by spark erosion or by the use of a slitting saw. These are both conventional techniques and will not, therefore, be described.

Preferably, the vent channels are arranged to provide vent paths each extending from top to bottom of the side wall of the mould surface, and they are provided at regularly spaced intervals around the side wall.

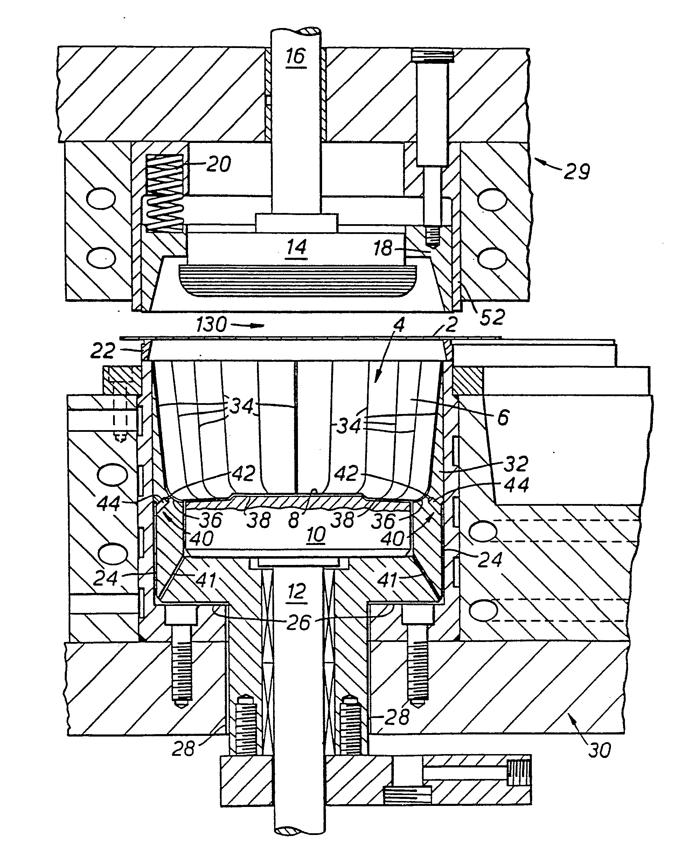

In order that the invention may be more clearly understood, a preferred embodiment thereof will now be described, by way of example, with reference to the accompanying drawing, which shows the relevant parts of a platen type thermoforming apparatus incorporating the invention.

The general structure and operation of the relevant parts of the thermoforming apparatus shown in the drawing are as follows.

Means (not shown) are provided for heating sheet plastics material (2) to a point where it has become softened. The softened material is then automatically moved to a position as illustrated in the figure where it lies between an upper, fixed, platen (29) and a lower, movable, platen (30). In this position, the material lies above a forming cavity generally indicated at 4, the mould surface of which comprises a conical wall (6) and a bottom (8) which consists of the top surface of an ejector (10) mounted at the end of an actuating shaft (12).

When the softened sheet plastics material (2) is in the position shown, the lower platen (30) is raised until a clamping ring (22) engages a complementary, spring-loaded clamping ring (18) on the upper platen to clamp the plastics material around the periphery of the cavity (4). The clamping ring (18) is biassed in a downward direction by compression springs (20) of which only one is shown.

After the material has been clamped, a plug (14) on a shaft (16) is driven downwardly by an actuator (not shown). The lower surface of the plug engages the plastics material and thereafter deforms the plastics material into the cavity within the clamped region. Because of the clamping effected there is little or no radially inward movement of the plastics material between the clamping rings (18, 22). As the deformation by the plug (14) occurs air within the cavity is expelled through a plurality of vent passageways (40) which will be further described below, and from the passageways through clearances (24, 26 and 28) to atmosphere. Further venting occurs via the small clearance around the periphery of ejector (10), further vent passageways (41), and clearances (26, 28), to atmosphere.

The plug (14) causes initial deformation of the plastics material, and complete deformation is achieved by applying in the space (130) above the sheet material a gas pressure higher than atmospheric in a manner which is well known in the art, so as to further deform the already partially deformed plastics sheet material into intimate contact with the walls and bottom of the cavity (4). The passageways provided for supplying the gas to the space (130) are omitted from the drawing for clarity.

After the sheet material has been made to conform to the mould cavity in this way, the lower platen is raised further through a small distance which is sufficient to cause a tubular knife (52) to sever the plastics material around the moulded article by shearing action with the outer surface of the lower clamping ring (22).

The lower platen (30) is then lowered to separate the clamping ring (18, 22) so that the plastics material is released from clamping. Initially the ejector (10) moves with the lower platen; after a small movement of the lower platen, however, further movement of the ejector is halted so that continuing movement of the lower platen causes the moulded article to be lifted clear of the top of the lower platen. The sheet material (2) is then indexed sideways to remove the formed article from the forming position. The cycle of operations described above is then repeated for the moulding of the next article.

In production apparatus, a plurality of moulding cavities are incorporated in a single platen and each cavity has associated with it the other features which are shown in the drawing.

The process generally described above is normally referred to in the art as "plug-assist" thermoforming.

According to the present invention, the mould surface within the mould cavity (4) is formed with vent channels. These channels, in the wall portion (6) of the cavity, are indicated by reference numeral (34) and extend axially of this wall portion from top to bottom at regularly spaced intervals. There may typically be between 4 and about 24 of the channels (34), a number nearer the higher end of this range being preferred when moulding a typical tub about 76 to 100 mm (3 inches to 4 inches) in diameter. The conical wall surface portion (6) merges smoothly into an inwardly curved wall portion (36) and it can be seen that the vent channels (34) curve road with this curved wall portion.

In register with the lower ends of the vent channels (34), there are further vent channels (38) which run radially inwardly across the upper surface of the ejector (10) and which meet at a point in the middle of the ejector upper surface.

The vent channels (34, 38) are cut in the mould surface, for example by conventional means such as a slitting saw or spark erosion techniques. They are preferably narrow so that the sheet material being formed will only bulge marginally into them during forming and will not block them. It is considered that a channel width in the range between 0.025 and 1.0 mm (0.001 and 0.04 inches) and a channel depth at least 0.025 mm (0.001 inches) will be acceptable. Preferably, the width of the channels is between about 0.1 and about 0.15 mm (about 0.004 and about 0.006 inches), and the depth of the channels is between about 0.1 and about 0.15 mm (about 0.004 and about 0.006 inches).

The vent passages previously referred to and generally indicated by reference numeral (40) are arranged so that there is one such vent passage leading towards atmosphere from each of the vent channels (34) at the curved portion (36) of the cavity wall. Although only two vent passages (40) are visible, it can be seen from these that they communicate with the vent channels (34) at intermediate points along the lengths of these channels and that each vent passage (40) can conduct air out of its associated wall vent channel (34) and ejector vent channel (38).

Each vent passage (40) comprises a narrow bore (42) which is joined at one end to the associated vent channel and which leads at its other end to a wider bore (44) that, in turn, leads towards the clearance (24). The bore (42) is of such diameter as to allow little or no plastics material to enter during moulding. The further bore (44) is of substantially greater diameter to assist machining.

It has been found that when the mould cavity (4) incorporates the invention in the manner as just described, then the thermoforming apparatus can be employed to produce tub containers from polypropylene sheet material of substantially improved quality and in which the external form of each finished container is an accurate reproduction of the cavity shape without exhibiting distortion and the problem of thin spots in the finished walls is considerably reduced.

In the described apparatus, the vent channels (34) in the wall portion (6) extend axially of the mould cavity (4) but this is not essential. The orientation and configuration of the channels may be varied.

The invention is not limited to plug assist thermoforming of polypropylene as particularly described. It may have application to moulding processes wherein plastics sheet, heated or otherwise, is made to conform to a mould cavity by pressure applied mechanically or by fluid pressure.

## Claims

1. Apparatus for forming an article from plastics sheet material, said apparatus comprising means (30) defining a mould surface (4) having a base wall (8) and a side wall (6) tapering towards said base wall (8), means for deforming said sheet material (2) into contact with said mould surface (4), and vent means (40, 41) for permitting air to escape from within the mould as the sheet material is deformed into the mould, characterised in that said side wall (6) contains vent channels (34) which are distributed over the area of said side wall (6) and which lead into said vent means (40, 41).

2. Apparatus according to claim 1, characterised in that said vent channels (34) have dimensions such that the sheet material (2) will not wholly fill, and therefore block said vent channels (34) when deformed into contact with said mould surface (4).

3. Apparatus according to claim 1 or 2, characterised in that said vent channels (34) are between 0.025 and 1.0 mm (0.001 and 0.04 inches) wide.

4. Apparatus according to claim 3, characterised in that said vent channels (34) are between about 0.1 and 0.15 mm (about 0.004 and about 0.006 inches) wide.

5. Apparatus according to claim 1 or 2, characterised in that said vent channels (34) are at least 0.025 mm (0.001 inches) deep.

6. Apparatus according to claim 5, characterised in that said vent channels (34) are between about 0.1 and about 0.15 mm (about 0.004 and 0.006 inches) deep.

7. Apparatus according to any preceding claim, characterised in that said vent channels (34) are regularly distributed over the area of said side wall (6).

8. Apparatus according to any preceding claim, characterised in that said vent channels (34) provide vent paths between the top and the bottom of said side wall (6).

9. Apparatus according to claim 8, characterised in that said mould surface (4) is generally conical and in that said vent channels (34) run in the axial direction of said mould surface (4).

10. Apparatus according to any preceding claim, characterised in that said base wall (8) also contains vent channels (38).

11. Apparatus according to claim 10, characterised in that said vent channels (38) in said base wall (8) are extensions of said vent channels (34) in said side wall (6).

12. Apparatus. according to any preceding claim, characterised in that each vent channel (34) communicates with a respective vent passageway (40) for conducting air away from said vent channel (34).

13. Apparatus according to claim 12, characterised in that said base (8) is defined by an ejector (10), said side wall (6) has an inwardly curved portion at its narrower end, and said vent passageways (40) join said vent channels (34) at said inwardly curved portion.

14. Apparatus according to any preceding claim, characterised in that said vent channels are cut in said side wall (6) by means of a slitting saw.

15. Apparatus according to any of claims 1 to 13, characterised in that said vent channels (34) are cut in said side wall (6) by means of spark erosion.

## Revendications

1. Appareil pour le formage d'un article à partir d'un matériau plastique en feuille, le dit appareil comprenant des moyens (30), déterminant une surface de moulage (4), comportant une paroi de base (8) et une paroi latérale (6), allant en se rétrécissant vers la dite paroi de la base (8), des moyens pour déformer le dit matériau en feuille (2) au contact de la dite surface de moulage (4), et des moyens d'évent (40, 41) pour permettre à l'air de s'échapper de l'intérieur du moule lorsque le matériau en feuille est déformé dans le moule, caractérisé en ce que la dite paroi latérale (6) contient des canaux d'évent (34) qui sont distribués sur la surface de la dite paroi latérale (6) et qui conduisent vers les dits moyens d'évent (40, 41).

2. Appareil selon la revendication 1, caractérisé en ce que les dits canaux d'évent (34) ont des dimensions telles que le dit matériau en feuille (2) ne va pas le remplir complètement et par conséquent bloquer les dits canaux d'évent (34) au cours de la déformation au contact de la dite surface de moulage (4).

3. Appareil selon la revendication 1 ou 2, caractérisé en ce que les dits canaux d'évent (34) ont une largeur comprise entre 0,025 et 1,0 mm (0,001 et 0,04 pouce).

4. Appareil selon la revendication 3, caractérisé en ce que la largeur des dits canaux d'évent (34) se situe entre environ 0,1 et 0,15 mm (environ 0,004 et 0,006 pouce).

5. Appareil selon la revendication 1 ou 2, caractérisé en ce que les dits canaux d'évent (34) ont une profondeur d'au moins 0,025 mm (0,001 pouce).

6. Appareil selon la revendication 5, caractérisé en ce que les dits canaux d'évent (34) ont une pro-

fondeur se situant entre environ 0,1 et 0,15 mm (environ 0,004 et 0,006 pouce).

7. Appareil selon l'une quelconque des revendications précédentes, caractérisé en ce que les dits canaux d'évent (34) sont régulièrement distribués sur la surface de la paroi latérale (6).

8. Appareil selon une quelconque des revendications précédentes, caractérisé en ce que les dits canaux d'évent (34) forment des chemins d'évent entre le sommet et le fond de la dite paroi latérale (6).

9. Appareil selon la revendication 8, caractérisé en ce que la dite surface de moulage (4) est généralement conique et en ce que les dits canaux d'évent (34) s'étendent selon la direction axiale de la dite surface de moulage (4).

10. Appareil selon une quelconque des revendications précédentes, caractérisé en ce que la dite paroi de base (8) comporte également des canaux d'évent (38).

11. Appareil selon la revendication 10, caractérisé en ce que les dits canaux d'évent (38) dans la dite paroi de base (8) sont des prolongements des dits canaux d'évent (34) dans la dite paroi latérale (6).

12. Appareil selon une quelconque des revendications précédentes, caractérisé en ce que chaque canal d'évent (34) communique avec un passage d'évent respectif (40) pour évacuer l'air du dit canal d'évent (34).

13. Appareil selon la revendication 12, caractérisé en ce que la dite base (8) est formée par un éjecteur (10), la dite paroi latérale (6) comporte une partie incurvée vers l'intérieur à son extrémité la plus étroite et les dits chemins d'évent (40) rejoignent les dits canaux (34) à la dite partie incurvée vers l'intérieur.

14. Appareil selon une quelconque des revendications précédentes, caractérisé en ce que les dits canaux d'évent sont découpés dans la dite paroi latérale (6) au moyen d'une scie de fendage.

15. Appareil selon une quelconque des revendications 1 à 13, caractérisé en ce que les dits canaux d'évent (34) sont découpés dans la dite paroi latérale (6) par électro-érosion.

**Patentansprüche**

1. Vorrichtung zur Formgebung eines Gegenstandes aus Plastik-Blattmaterial mit Mitteln (30), die eine Formoberfläche (4) bilden, die eine Basiswand (8) und eine Seitenwand (6) besitzt, welche sich nach der Basiswand (8) hin verjüngt, mit Mitteln zur Deformation des Blattmaterials (2) in Berührung mit der Formoberfläche (4), und mit einer Entlüftungseinrichtung (40, 41) durch die die Luft von dem Inneren der Form entweichen kann, wenn das Blattmaterial in die Form hineindeformiert wird, dadurch gekennzeichnet, daß die Seitenwand (6) Entlüftungskanäle (34) aufweist, die über den Bereich der Seitenwand (6) verteilt sind und in die Entlüftungseinrichtung (40, 41) hineinführen.

2. Vorrichtung nach Anspruch 1, dadurch gekennzeichnet, daß die Entlüftungskanäle (34) derartige Abmessungen aufweisen, daß das Blattmaterial (2) die Entlüftungskanäle (34) nicht voll ausfüllt und deshalb nicht blockiert, wenn das Plastikmaterial in Berührung mit der Formoberfläche (4) deformiert wird.

3. Vorrichtung nach den Ansprüchen 1 oder 2, dadurch gekennzeichnet, daß die Entlüftungskanäle (34) zwischen 0,025 und 1,0 mm (0,001 und 0,04 Zoll) breit sind.

4. Vorrichtung nach Anspruch 3, dadurch gekennzeichnet, daß die Entlüftungskanäle (34) zwischen etwa 0,1 und 0,15 mm (etwa 0,004 und ungefähr 0,006 Zoll) breit sind.

5. Vorrichtung nach den Ansprüchen 1 oder 2, dadurch gekennzeichnet, daß die Entlüftungskanäle (34) wenigstens 0,025 mm (0,001 Zoll) tief sind.

6. Vorrichtung nach Anspruch 5, dadurch gekennzeichnet, daß die Entlüftungskanäle (34) zwischen etwa 0,1 und etwa 0,15 mm (ungefähr 0,004 und 0,006 Zoll) tief sind.

7. Vorrichtung nach einem der vorhergehenden Ansprüche, dadurch gekennzeichnet, daß die Entlüftungskanäle (34) gleichmäßig über den Bereich der Seitenwand (6) verteilt sind.

8. Vorrichtung nach einem der vorhergehenden Ansprüche, dadurch gekennzeichnet, daß die Entlüftungskanäle (34) Entlüftungspfade zwischen dem Kopf und dem Boden der Seitenplatte (6) bilden.

9. Vorrichtung nach Anspruch 8, dadurch gekennzeichnet, daß die Formoberfläche (4) allgemein konisch ausgebildet ist und daß die Entlüftungskanäle (34) in Achsrichtung der Formoberfläche (4) verlaufen.

10. Vorrichtung nach einem der vorhergehenden Ansprüche, dadurch gekennzeichnet, daß die Basiswand (8) außerdem Entlüftungskanäle (38) aufweist.

11. Vorrichtung nach Anspruch 10, dadurch gekennzeichnet, daß die Entlüftungskanäle (38) in der Grundplatte (8) Fortsätze der Entlüftungskanäle (34) in der Seitenwand (6) bilden.

12. Vorrichtung nach einem der vorhergehenden Ansprüche, dadurch gekennzeichnet, daß jeder Entlüftungskanal (34) jeweils mit einem Entlüftungskanal (40) in Verbindung steht, um Luft aus dem Entlüftungskanal (34) abzuführen.

13. Vorrichtung nach Anspruch 12, dadurch gekennzeichnet, daß die Basis (8) von einem Ejektor (10) definiert ist, daß die Seitenwand (6) einen nach innen gekrümmten Abschnitt an ihrem schmaleren Ende aufweist, und daß die Entlüftungskanäle (40) die Entlüftungskanäle (34) an dem nach innen gekrümmten Abschnitt treffen.

14. Vorrichtung nach einem der vorhergehenden Ansprüche, dadurch gekennzeichnet, daß die Entlüftungskanäle in die Seitenwand (6) mittels einer Schlitzsäge eingeschnitten sind.

15. Vorrichtung nach einem der Ansprüche 1 bis 13, dadurch gekennzeichnet, daß die Entlüftungskanäle (34) in der Seitenwand (6) durch Funkenerosion eingeschnitten sind.